# FASCICULE DE BREVET EUROPEEN

(11) **EP 3 529 531 B1**
(45) Date de publication et mention de la délivrance du brevet: **02.12.2020**
(21) Numéro de dépôt: 17794378.4
(22) Date de dépôt: 16.10.2017
(51) Int. Cl.: F17C 5/06

(54) **PROCÉDÉ ET DISPOSITIF DE REMPLISSAGE D'UN RÉSERVOIR DE GAZ SOUS PRESSION**
VERFAHREN UND VORRICHTUNG ZUR BEFÜLLUNG EINES TANKS MIT DRUCKGAS
METHOD AND DEVICE FOR FILLING A TANK WITH PRESSURISED GAS

(30) Priorité: 19.10.2016 FR 1660131
(43) Date de publication de la demande: 28.08.2019
(73) Titulaire: L'AIR LIQUIDE, Société Anonyme pour l'Etude et l'Exploitation des Procédés Georges Claude, 75007 Paris (FR)
(72) Inventeur: BOURGEOIS, Thomas, 75018 Paris (FR); AMMOURI, Fouad, 91300 Massy (FR)
(74) Mandataire: De Cuenca, Emmanuel Jaime
(86) Numéro de dépôt international: PCT/FR2017/052835
(87) Numéro de publication internationale: WO 2018/073520

(56) Documents cités:
- FR-A1- 2 884 592
- FR-A1- 2 896 028
- FR-A1- 3 027 999
- GB-A- 2 127 533
- US-A- 5 641 005

## Description

L'invention concerne un procédé et un dispositif de remplissage d'un réservoir de gaz sous pression.

L'invention concerne plus particulièrement un procédé de remplissage d'un réservoir de gaz sous pression jusqu'à un pression cible à partir d'au moins une source de gaz sous pression reliée au réservoir via une conduite de transfert munie d'au moins une vanne, le réservoir ayant une forme cylindrique de longueur interne déterminée et de diamètre interne déterminé, l'extrémité de la conduite de transfert reliée au réservoir formant un injecteur débouchant dans le réservoir avec un diamètre d'injection déterminé, dans lequel le procédé comprend une étape de transfert de gaz sous pression de la source vers le réservoir à un débit déterminé, le procédé comprenant une étape de régulation du transfert de gaz de la source vers le réservoir pour réduire l'échauffement produit dans le réservoir, l'étape de régulation du transfert de gaz comprenant au moins l'un parmi : un dimensionnement du diamètre d'injection, un dimensionnement du débit de gaz transféré .

Le remplissage rapide de réservoirs de gaz sous pression, notamment d'hydrogène, provoque un échauffement du gaz et du réservoir. Cet échauffement doit être maîtrisé pour ne pas endommager le réservoir (en particulier en cas de réservoir composite).

Des solutions connues consistent à refroidir le gaz transféré (cf. par exemple US5641005) ou à contrôler le débit de remplissage (cf. par exemple FR2896028A1). Il est notamment connu de prévoir des rampes vitesses de remplissages adaptées par exemple aux conditions de remplissage (vitesse de remplissage fonction par exemple de la température ambiante et de la pression cible).

L'échauffement dans le réservoir au cours du remplissage est un phénomène complexe à modéliser (cf. par exemple l'article de K. Barral, S. Pregassame, and P. Renault, "Thermal effects of fast filling hydrogen compression in refueling stations", Proceedings of 15th World Hydrogen Energy Conference, Yokohama Japan, June 2004).

Ainsi, la température du gaz et du réservoir peut être très hétérogène au sein du réservoir. Les inventeurs ont en particulier mis en évidence que des zones du réservoir peuvent présenter une température bien supérieure à la température moyenne du réservoir ou du gaz qui est calculée ou mesurée.

Une solution connue pour résoudre ce problème consiste à diminuer le débit et donc la rampe de pression pour réduire la température moyenne du gaz. Ceci augmente cependant le temps de remplissage et n'élimine pas forcément les pics de chaleur à certains endroits. En effet, dans certaines situations ceci peut même augmenter l'échauffement : en diminuant le débit, on peut augmenter les hétérogénéités et donc augmenter la température maximale du gaz.

Une autre solution consiste à augmenter le refroidissement du gaz pour réduire la température moyenne du gaz. Ceci augmente significativement le coût de l'installation et le coût du gaz (l'hydrogène par exemple) fourni.

Un but de la présente invention est de pallier tout ou partie des inconvénients de l'art antérieur relevés ci-dessus.

Le document FR3027999A1 décrit un procédé conforme au préambule de la revendication 1.

A cette fin, le procédé selon l'invention, par ailleurs conforme à la définition générique qu'en donne le préambule ci-dessus, est essentiellement caractérisé en ce que l'étape de régulation est réalisée en fonction du ratio L/D entre la longueur et le diamètre du réservoir.

Selon l'invention, cette régulation du transfert de gaz est donc adaptée en fonction de la géométrie du réservoir et permet de réduire les hétérogénéités de température dans le réservoir. En réduisant cette hétérogénéité, la température maximale atteinte par le gaz ou le réservoir est ainsi également diminuée.

Les inventeurs ont en particulier constaté que ceci permet de limiter les phénomènes de stratification et d'hétérogénéité des températures du gaz au sein du réservoir.

Ceci permet de remplir des réservoirs dans des conditions de sécurité accrues. Ceci peut permettre potentiellement l'optimisation des autres mesures de contrôle de la température finale du gaz dans le réservoir (comme par exemple la diminution du refroidissement du gaz).

En effet, le procédé selon l'invention peut éventuellement s'appliquer en plus d'autres mesures de contrôle de la température (refroidissement du gaz, courbes de montée en pression...).

Par ailleurs, des modes de réalisation de l'invention peuvent comporter l'une ou plusieurs des caractéristiques suivantes :
- lorsque le ratio L/D entre la longueur et le diamètre du réservoir est inférieur à un premier seuil déterminé compris entre deux et quatre et de préférence égal à trois, l'étape de régulation consiste à maintenir le ratio (Q/D1²) entre le débit massique du gaz transféré et le carré du diamètre d'injection au dessus d'un second seuil déterminé,
- l'étape de régulation consistant à maintenir le ratio Q/D1² au dessus d'un second seuil déterminé comprend au moins l'un parmi : une augmentation du débit de gaz transféré, une diminution du diamètre d'injection,
- l'étape de régulation du transfert de gaz est réalisée en fonction de la pression cible de remplissage du réservoir,
- le second seuil déterminé est fonction de la pression cible de remplissage du réservoir,
- le second seuil augmente lorsque la pression cible de remplissage du réservoir augmente,
- le gaz est de hydrogène et lorsque la pression cible de remplissage du réservoir est comprise entre 700 et 900 bar, le second seuil est compris entre 175 et 225 kg. m⁻².s⁻¹ et de préférence égal à 200 kg. m⁻².s⁻¹
- lorsque ratio L/D entre la longueur et le diamètre du réservoir est supérieur au premier seuil déterminé, l'étape de régulation consiste à maintenir le ratio Q/D1² au dessus du second seuil déterminé et en dessous d'un troisième seuil déterminé,
- l'étape de régulation consistant à maintenir le ratio Q/D1² au dessus d'un second seuil déterminé et en dessous du troisième seuil déterminé comprend au moins l'un parmi : une augmentation ou une diminution du débit de gaz transféré, une augmentation ou une diminution du diamètre d'injection,
- lorsque la pression cible de remplissage du réservoir est comprise entre 700 et 900 bar, le troisième seuil est compris entre 1200 et 1600 kg. m⁻².s⁻¹ et de préférence égal à 1400 kg. m⁻².s⁻¹,
- l'étape de régulation du transfert de gaz est réalisée avant ou au début du transfert de gaz, c'est-à-dire que le dimensionnement du diamètre d'injection et/ou le dimensionnement du débit de gaz transféré est fixée avant le début du remplissage,
- lorsque le gaz est de l'hydrogène et la pression cible de remplissage du réservoir est comprise entre 200 et 300 bar, le second seuil est compris entre 75 et 100 kg. m⁻².s⁻¹ et de préférence égal à 85 kg. m⁻².s⁻¹
- lorsque le gaz est de l'hydrogène et la pression cible de remplissage du réservoir est comprise entre 300 et 400 bar, le second seuil est compris entre 100 et 140 kg. m⁻².s⁻¹ et de préférence égal à 120 kg. m⁻².s⁻¹
- lorsque le gaz est de l'hydrogène et la pression cible de remplissage du réservoir est comprise entre 450 et 600 bar, le second seuil est compris entre 140 et 175 kg. m⁻².s⁻¹ et de préférence égal à 160 kg. m⁻².s⁻¹
- le réservoir est disposé horizontalement durant le transfert de gaz en son sein via l'injecteur.

L'invention concerne également un dispositif de remplissage de réservoirs de gaz sous pression jusqu'à un pression cible comprenant une source de gaz sous pression, une conduite de transfert de gaz de la source munie d'au moins une vanne et destinée à être reliée à un réservoir, l'extrémité de la conduite de transfert destinée à être reliée au réservoir formant un injecteur ayant un diamètre d'injection déterminé, le dispositif comprenant un organe électronique de pilotage du remplissage assurant le contrôle de la au moins une vanne, l'organe électronique de pilotage étant configuré pour recevoir, stocker et traiter des données et notamment pour recevoir des caractéristiques dimensionnelles du réservoir à remplir à savoir la longueur interne et le diamètre interne du réservoir ou le ratio L/D entre ces derniers, l'organe électronique de pilotage étant également configuré comparer le ratio L/D avec au moins un seuil et, en fonction, modifier ou signaler la nécessité de modifier au moins un paramètre de remplissage parmi : le diamètre d'injection, le débit de gaz transféré en fonction du ratio.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue de côté, schématique et partielle, illustrant un exemple de structure et de fonctionnement d'un dispositif de remplissage selon l'invention,
- la figure 2 représente de façon schématique et partielle un exemple de fonctionnement d'un tel procédé de remplissage.

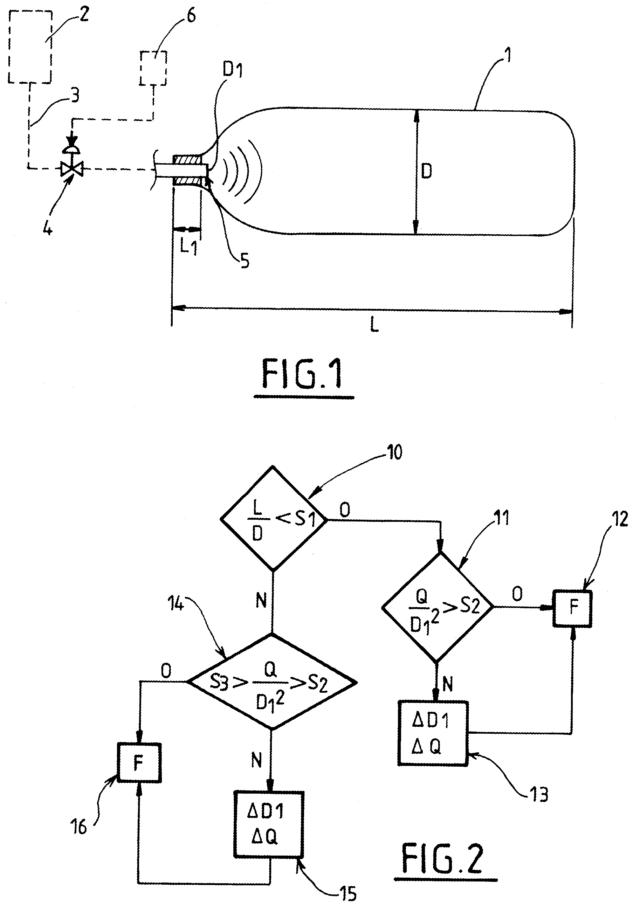

Comme illustré à la figure 1, le remplissage de réservoirs 1 de gaz sous pression peut être mise en œuvre par un dispositif (ou station) de remplissage comprenant une source 2 de gaz sous pression, une conduite 3 de transfert de gaz reliée à la source 2 et munie d'au moins une vanne 4 de contrôle du débit. La conduite 3 de transfert comprend au moins une extrémité destinée à être reliée à un réservoir 1 à remplir.

Classiquement, la source 2 de gaz sous pression peut comprendre au moins l'un parmi : un ou plusieurs réservoirs de gaz sous pression, au moins un compresseur, une source de gaz liquéfié et un vaporiseur...

L'extrémité de la conduite 3 de transfert destinée à être reliée au réservoir 1 forme ou comprend un injecteur 5 ayant un diamètre d'injection déterminé D1. Le dispositif comprend de préférence en outre un organe 6 électronique de pilotage du remplissage assurant le contrôle de la au moins une vanne 4 et/ou d'autres organes du dispositif de remplissage.

Le dispositif est configuré ou utilisé pour remplir un réservoir 1 de gaz sous pression jusqu'à une pression cible, par exemple 250bar ou 350bar ou 500 bar ou 700bar ou plus, notamment 800 ou 900bar.

Le dispositif est en particulier prévu pour remplir de préférence des réservoirs 1 cylindriques en position horizontale (c'est-à-dire couchés selon leur direction longitudinale).

Les réservoirs 1 ont une forme cylindrique de longueur interne déterminée L et de diamètre interne déterminé D.

L'extrémité de la conduite 3 de transfert est connectée au niveau d'un orifice situé à une extrémité longitudinale du réservoir 1.

Selon l'invention, le transfert de gaz sous pression de la source 2 et l'intérieur du réservoir 1 est réalisé à un débit Q (notamment un débit massique) déterminé.

Selon l'invention, le transfert de gaz de la source 2 vers le réservoir 1 est adapté pour réduire l'échauffement produit dans le réservoir 1. Cette adaptation du transfert de gaz comprend au moins l'un parmi un dimensionnement du diamètre d'injection D1, un dimensionnement du débit Q de gaz transféré et cette modification est réalisée en fonction du ratio L/D entre la longueur L et le diamètre D du réservoir 1.

Ainsi, ce ratio L/D peut délimiter deux types de réservoir 1, par exemple des réservoirs dits « courts » (L/D inférieur à un premier seuil S1) et des réservoirs dits « longs » (L/D supérieur au premier seuil S1).

Les inventeurs ont en effet identifié que, en fonction de ce critère géométrique, il est possible d'adapter le diamètre d'injection D1 ou le débit Q de gaz transféré pour diminuer avec succès les hétérogénéités de température du gaz dans le réservoir 1, c'est-à-dire de diminuer les points trop chauds lors du remplissage.

Ainsi, lorsque ratio L/D entre la longueur L et le diamètre D du réservoir 1 est inférieur à un premier seuil S1 déterminé compris entre deux et quatre et de préférence égal à trois (cf. réf. 11 figure 2), l'étape de régulation consiste de préférence à maintenir le ratio Q/D1² entre le débit massique Q du gaz transféré et le carré du diamètre D1 d'injection au dessus d'un second seuil S2 déterminé (cf. réf.11 figure 2). Si ce ratio Q/D1² est supérieur au second seuil S2 le remplissage F peut être réalisé sans risque d'échauffement trop important (cf. réf. 12 figure 2).

En effet le rapport Q/D1² = rho.π.V/4 où rho est la masse volumique du gaz et V la vitesse moyenne du gaz au niveau de l'injecteur, π étant la constante pi égale à 3,14159.

Rho est tabulé pour chaque gaz en fonction de sa température et de sa pression. Autrement dit, pour une température et une pression donnée, la masse volumique du gaz dépend de sa nature. Par conséquent, le rapport Q/D1² dépend aussi de la nature du gaz.

La limite S2 est calculée avec la valeur de vitesse V égale à 5 m/s dans les conditions de fin de remplissage et la limite S3 est calculée avec la valeur de vitesse de 100 m/s pour les conditions de début du remplissage.

Les seuils S2 et S3 sont de préférence dépendant (ou fonction) de la pression cible de remplissage du réservoir 1 et de préférence également de la nature du gaz.

Par exemple pour du remplissage avec de l'hydrogène:
- lorsque la pression cible de remplissage du réservoir 1 est comprise entre 200 et 300 bar, le second seuil S2 est compris entre 75 et 100kg. m⁻².s⁻¹ et de préférence égal à 85 kg. m⁻².s⁻¹
- lorsque la pression cible de remplissage du réservoir 1 est comprise entre 300 et 400 bar, le second seuil S2 est compris entre 100 et 140 kg. m⁻².s⁻¹ et de préférence égal à 120 kg. m⁻².s⁻¹
- lorsque la pression cible de remplissage du réservoir 1 est comprise entre 450 et 600 bar, le second seuil S2 est compris entre 140 et 175 kg. m⁻².s⁻¹ et de préférence égal à 160 kg. m⁻².s⁻¹
- lorsque la pression cible de remplissage du réservoir 1 est comprise entre 700 et 900 bar, le second seuil (S2) est compris entre 175 et 225 kg. m⁻².s⁻¹ et de préférence égal à 200 kg. m⁻².s⁻¹.

Le maintien du ratio Q/D1² au dessus d'un second seuil S2 déterminé peut être facilement réalisé en adaptant le diamètre D1 d'injection (diminution par exemple) et/ou en adaptant le débit Q massique de remplissage (augmentation par exemple) cf. réf. 13 figure 2. Ces conditions opératoires peuvent être notamment figées avant le remplissage ou modifiée avant ou pendant le remplissage en vue de la géométrie des réservoirs 1 qui devront être remplis à une pression déterminée.

C'est-à-dire que, en fonction de la géométrie (connue) des réservoirs 1 et éventuellement de la pression cible, le diamètre d'injection D1 et/ou la rampe de remplissage (débit massique) est (sont) adapté(s) pour satisfaire à la recommandation ci-dessus (cf. réf. 13, figure 2).

A noter que lorsque l'injecteur 5 pénètre à l'intérieur du réservoir 1 sur une distance L1, l'expression L/D<S1 est de préférence modifiée comme suit : (L-L1)/D<S1 pour tenir compte de la longueur réelle de progression du gaz injecté.

Pour un premier seuil S1 égal à trois, on obtient (L-L1)<3D pour les réservoirs courts et (L-L1)>3D pour les réservoirs longs (cf. figure 1).

Pour ces réservoirs courts, les inventeurs ont mis en évidence qu'il n'y pas ou peu d'hétérogénéités horizontales de températures du fait par exemple que le jet de gaz injecté ne frappe par latéralement les parois du réservoir (en raison de l'angle et de la forme habituelle du jet de gaz des injecteurs utilisés).

Les inventeurs ont constaté que dans cette configuration géométrique il s'établi en revanche soit un régime de mélange turbulent, soit un régime stratifié verticalement dans le réservoir 1. Dans un régime turbulent la température est relativement bien homogène (moins de 3,5°C entre la température moyenne et la température maximale de la paroi interne pour un injecteur de 6mm de diamètre ou moins de 5,5°C pourun diamètre d'injecteur de 10mm). En revanche, dans un régime stratifié verticalement on peut observer des gradients de température allant jusqu'à 25°C par exemple.

Les inventeurs ont mis en évidence que la modification du diamètre d'injection et/ou du débit pour maintenir le ratio Q/D1² au dessus du second seuil S2 permet de minimiser les risques d'établissement d'un régime stratifié verticalement. C'est-à-dire que selon cette recommandation il est établi un régime de mélange turbulent qui minimise les hétérogénéités de températures. Ceci va à l'encontre des préconisations de l'art antérieur qui incitaient au contraire à diminuer le débit de remplissage pour limiter l'échauffement.

Lorsque le ratio L/D est supérieur au premier seuil S1, l'étape de régulation consiste de préférence à maintenir le ratio Q/D1² au dessus du second seuil S2 déterminé et en dessous d'un troisième seuil S3 déterminé (cf. réf. 14 figure 2).

Comme précédemment, l'étape de régulation peut comprendre au moins l'un parmi : une augmentation ou une diminution du débit Q de gaz transféré, une augmentation ou une diminution du diamètre d'injection D1 cf. réf. 15 figure 2. Lorsque cette recommandation est satisfaite le remplissage F peut être réalisé sans risque 'échauffement trop important (cf. réf. 16 figure 2).

Les inventeurs ont mis en évidence que les régulations ci-dessus permettent de contrôler le régime gazeux dans le réservoir long en cours de remplissage. En particulier, selon l'invention les régimes de stratifications verticaux et horizontaux sont diminués. C'est-à-dire que les hétérogénéités de températures sont également réduites pour les réservoirs longs via cette régulation.

Ainsi, dans le cas de réservoirs longs (L/D>S1 ou (L-L1)/D>S1 il est possible de définir une plage de ratio Q/D1² qui permet de réduire les hétérogénéités de température en cours de remplissage.

Comme précédemment, le troisième seuil déterminé S3 est de préférence dépendant (ou fonction) de la pression cible de remplissage du réservoir 1 et de préférence également de la nature du gaz.

Par exemple pour du remplissage avec de l'hydrogène:
- lorsque la pression cible de remplissage du réservoir 1 est comprise entre 200 et 300 bar, le troisième seuil S3 est compris entre 600 et 800kg. m⁻².s⁻¹ et de préférence égal à environ 715 kg. m⁻².s⁻¹
- lorsque la pression cible de remplissage du réservoir 1 est comprise entre 300 et 400 bar, le troisième seuil S3 est compris entre 800 et 1000kg. m⁻².s⁻¹ et de préférence égal à 900 kg. m⁻².s⁻¹
- lorsque la pression cible de remplissage du réservoir 1 est comprise entre 450 et 600 bar, le troisième seuil S3 est compris entre 1000 et 1300kg. m⁻².s⁻¹ et de préférence égal à 1150 kg. m⁻².s⁻¹
- lorsque la pression cible de remplissage du réservoir 1 est comprise entre 700 et 900 bar, le troisième seuil S3 est compris entre 1300 et 1500 kg. m⁻².s⁻¹ et de préférence égal à 1400 kg. m⁻².s⁻¹.

Ainsi, dans un mode de réalisé préféré, lorsqu'il est prévu le remplissage de réservoirs, selon la géométrie des réservoirs (courts ou longs) et la pression cible de remplissage, le ratio Q/D1² est maintenu au-dessus (et éventuellement en-dessous pour S3) des seuils définis ci-dessus. Ceci est réalisé en prédéfinissant le diamètre d'injection et/ou en adaptant le débit massique de remplissage. Ceci réduit les problèmes d'échauffement en réduisant l'hétérogénéité de la température du gaz et du réservoir au cours du remplissage.

Les calculs pour respecter ces conditions opératoires sont relativement simples et peuvent être aisément réalisées par un calculateur ou un ordinateur pour prédéfinir ou adapter les conditions opératoires d'une station de remplissage.

Dans le cas par exemple du remplissage avec de l'hydrogène à 700bar d'un réservoir court (L-Li)/D<3 ayant un volume de 30 litres initialement prévu avec un diamètre d'injecteur de 0,01m et un débit massique de 0,004 kg/seconde, le calcul du ratio Q/D1² donne le résultat 40 kg. m⁻².s⁻¹

Ceci est inférieur à la préconisation d'environ 200 kg. m⁻².s⁻¹ au moins (voir même 197 kg. m⁻².s⁻¹). Pour éviter ou limiter les phénomènes de stratification (points chauds) deux stratégies sont possibles. Selon une première stratégie, il est possible de diminuer le diamètre d'injection D1 à 0,003 m ce qui permet d'obtenir un ratio Q/D1² égal à 444 kg. m⁻².s⁻¹. Une seconde stratégie peut consister à augmenter le débit massique jusqu'à 0,4 kg.s⁻¹ par exemple. Le ratio Q/D1² passe alors à 400kg. m⁻².s⁻¹. Cette augmentation de débit Q diminue les hétérogénéités mais peut conduire à une augmentation de la température moyenne. Pour éviter cet inconvénient les deux stratégies ci-dessus peuvent être modulées et combinées (augmentation moindre du diamètre et augmentation moindre du débit) par exemple diamètre d'injection D1=0,005m et débit Q égal à 0,1 kg.s⁻¹. Ceci permet d'atteindre un ratio de 400 kg. m⁻².s⁻¹.

Les conditions de remplissage associées aux exemples ci-dessus peuvent être les suivantes : une température de gaz de 0°C pour un remplissage à 350bar, -20°C, -40°C pour un remplisage à 500 ou 700bar. La vitesse de remplissage finale peut être d'au moins 5 m/s.

Par exemple un organe 6 électronique de stockage d'acquisition et de traitement de données faisant partie de la station ou déporté peut être utilisé. Cet organe 6 électronique peut le cas échéant assurer le contrôle d'au moins un élément de la station par exemple la au moins une vanne 4 de la conduite de transfert (par exemple pour réguler le débit transféré).

L'invention est particulièrement adaptée aux remplissages de réservoirs 1 disposés horizontalement lors du remplissage (génératrices de la portion cylindriques horizontales). De plus, l'invention est particulièrement adaptée aux remplissages de réservoirs ayant des rapports L/D compris par exemple entre 1,4 à 6,6. De plus ces mesures s'appliquent particulièrement bien aux injecteurs ayant un diamètre compris entre 3 à 25 mm. Bien entendu d'autres géométries ou configurations de remplissages sont possibles (verticales, dimensions différentes), le cas échéant avec des avantages moindres ou nécessitant de petites adaptations (seuils...).

Par « régulation du transfert de gaz » on entend notamment un contrôle (par exemple dynamique) ou un dimensionnement prédéterminé des conditions de remplissage (D1 et/ou Q notamment).

## Revendications

1. Procédé de remplissage d'un réservoir (1) de gaz sous pression jusqu'à un pression cible à partir d'au moins une source (2) de gaz sous pression reliée au réservoir (1) via une conduite (3) de transfert munie d'au moins une vanne (4), le réservoir (1) ayant une forme cylindrique de longueur interne déterminée (L) et de diamètre interne déterminé (D), l'extrémité de la conduite (3) de transfert reliée au réservoir formant un injecteur (5) débouchant dans le réservoir avec un diamètre d'injection déterminé (D1), dans lequel le procédé comprend une étape de transfert de gaz sous pression de la source (2) vers le réservoir à un débit (Q) déterminé, le procédé comprenant une étape de régulation ou de dimensionnement du transfert de gaz de la source (2) vers le réservoir (1) pour réduire l'échauffement produit dans le réservoir (1), **caractérisé en ce que** l'étape de régulation/dimensionnement du transfert de gaz comprend au moins l'un parmi : un dimensionnement du diamètre d'injection (D1), un dimensionnement du débit (Q) de gaz transféré ; l'étape de régulation/dimensionnement du transfert de gaz étant réalisée en fonction du ratio L/D entre la longueur (L) et le diamètre (D) du réservoir.

2. Procédé selon la revendication 1 **caractérisé en ce qu'**il comporte une étape de détermination ou de calcul du ratio L/D du réservoir, une étape de comparaison de ce ratio L/D avec du premier seuil (S1) prédéterminé.

3. Procédé selon la revendication 1 ou 2 **caractérisé en ce qu'**il comprend une étape de régulation du ratio (Q/D1²) consistant à contrôler ou dimensionner le débit Q et/ou le diamètre d'injection (D1) en fonction de la comparaison entre le ratio (L/D) et le premier seuil (S1).

4. Procédé selon la revendication 1, **caractérisé en ce que**, lorsque le ratio L/D entre la longueur (L) et le diamètre (D) du réservoir est inférieur à au premier seuil (S1) déterminé qui est compris de préférence entre deux et quatre et de préférence égal à trois, l'étape de régulation/dimensionnement consiste à maintenir le ratio (Q/D1²) entre le débit massique (Q) du gaz transféré et le carré du diamètre (D1) d'injection au dessus d'un second seuil (S2) déterminé.

5. Procédé selon l'une quelconque des revendications 3 à 4, **caractérisé en ce que** l'étape de régulation/dimensionnement consistant à maintenir le ratio (Q/D1²) au dessus d'un second seuil (S2) déterminé comprend au moins l'un parmi : une augmentation du débit (Q) de gaz transféré, une diminution du diamètre d'injection (D1).

6. Procédé selon l'une quelconque des revendications 1 à 5, **caractérisé en ce que** l'étape de régulation/dimensionnement du transfert de gaz est réalisée en fonction de la pression cible de remplissage du réservoir (1).

7. Procédé selon la revendication 4 ou 5, **caractérisé en ce que** le second seuil (S2) déterminé est fonction de la pression cible de remplissage du réservoir (1).

8. Procédé selon la revendication 7, **caractérisé en ce que** le second seuil (S2) augmente lorsque la pression cible de remplissage du réservoir (1) augmente.

9. Procédé selon l'une quelconque des revendications 7 ou 8, **caractérisé en ce que** le gaz est de hydrogène et lorsque la pression cible de remplissage du réservoir (1) est comprise entre 700 et 900 bar, le second seuil (S2) est compris entre 175 et 225 kg. m⁻².s⁻¹ et de préférence égal à 200 kg. m⁻².s⁻¹.

10. Procédé selon l'une quelconque des revendications 4, 5, 7, 8, 9, **caractérisé en ce que**, lorsque ratio (L/D) entre la longueur (L) et le diamètre (D) du réservoir est supérieur au premier seuil (S1) déterminé, l'étape de régulation/dimensionnement consiste à maintenir le ratio (Q/D1²) au dessus du second seuil (S2) déterminé et en dessous d'un troisième seuil (S3) déterminé.

11. Procédé selon la revendication 10, **caractérisé en ce que** l'étape de régulation consistant à maintenir le ratio (Q/D1²) au dessus d'un second seuil (S2) déterminé et en dessous du troisième seuil (S3) déterminé comprend au moins l'un parmi : une augmentation ou une diminution du débit (Q) de gaz transféré, une augmentation ou une diminution du diamètre d'injection (D1).

12. Procédé selon la revendication 11, **caractérisé en ce que** lorsque la pression cible de remplissage du réservoir (1) est comprise entre 700 et 900 bar, le troisième seuil (S3) est compris entre 1200 et 1600 kg. m⁻².s⁻¹ et de préférence égal à 1400 kg. m⁻².s⁻¹, lorsque le gaz est de l'hydrogène et la pression cible de remplissage du réservoir est comprise entre 200 et 300 bar, le second seuil peut être compris entre 75 et 100 kg. m⁻².s⁻¹ et de préférence égal à 85 kg. m⁻².s⁻¹ , lorsque le gaz est de l'hydrogène et la pression cible de remplissage du réservoir est comprise entre 300 et 400 bar, le second seuil peut être compris entre 100 et 140 kg. m⁻².s⁻¹ et de préférence égal à 120 kg. m⁻².s⁻¹ , lorsque le gaz est de l'hydrogène et la pression cible de remplissage du réservoir est comprise entre 450 et 600 bar, le second seuil peut être compris entre 140 et 175 kg. m⁻².s⁻¹ et de préférence égal à 160 kg. m⁻².s⁻¹.

13. Procédé selon l'une quelconque des revendications 1 à 12, **caractérisée en ce que** l'étape de régulation du transfert de gaz est réalisée avant ou au début du transfert de gaz, c'est-à-dire que le dimensionnement du diamètre d'injection et/ou le dimensionnement du débit de gaz transféré est fixée avant le début du remplissage.

14. Procédé selon l'une quelconque des revendications 1 à 13 **caractérisée en ce que** le réservoir est disposé horizontalement durant le transfert de gaz en son sein via l'injecteur.

15. Dispositif de remplissage de réservoirs (1) de gaz sous pression jusqu'à un pression cible comprenant une source (2) de gaz sous pression, une conduite (3) de transfert de gaz de la source munie d'au moins une vanne (4) et destinée à être reliée à un réservoir (1), l'extrémité de la conduite (3) de transfert destinée à être reliée au réservoir formant un injecteur (5) ayant un diamètre d'injection déterminé (D1), le dispositif comprenant un organe (6) électronique de pilotage du remplissage assurant le contrôle de la au moins une vanne (4), l'organe (6) électronique de pilotage étant configuré pour recevoir, stocker et traiter des données et notamment pour recevoir ou calculer des caractéristiques dimensionnelles du réservoir (1) à remplir à savoir la longueur (L) et le diamètre (D) du réservoir ou le ratio L/D entre ces derniers, l'organe (6) électronique de pilotage étant également configuré pour comparer le ratio L/D avec au moins un seuil (S1) et, en fonction, modifier ou signaler la nécessité de modifier au moins un paramètre de remplissage parmi : le diamètre d'injection (D1), le débit (Q) de gaz transféré en fonction du ratio.

16. Dispositif selon la revendication 15 **caractérisé en ce que** l'organe (6) électronique de pilotage est configuré pour établir ou modifier le débit Q et/ou le diamètre d'injection pour maintenir le ratio Q/D1² entre le débit massique Q du gaz injecté et le carré du diamètre D1 d'injection au-dessus d'un second seuil (S2) prédéterminé et/ou dans un intervalle (S2-S3) prédéterminé.

## Patentansprüche

1. Verfahren zum Füllen eines Behälters (1) mit Druckgas bis zu einem Zieldruck aus mindestens einer Druckgasquelle (2), die mit dem Behälter (1) über eine mit mindestens einem Ventil (4) versehene Transferleitung (3) verbunden ist, wobei der Behälter (1) eine zylindrische Form mit einer bestimmten Innenlänge (L) und einem bestimmten Innendurchmesser (D) aufweist, wobei das Ende der mit dem Behälter verbundenen Transferleitung (3) einen Injektor (5) bildet, der mit einem bestimmten Injektionsdurchmesser (D1) in den Behälter mündet, wobei das Verfahren einen Schritt des Druckgastransfers von der Quelle (2) zu dem Behälter mit einem bestimmten Durchsatz (Q) umfasst, wobei das Verfahren einen Schritt des Regulierens oder Bemessens des Gastransfers von der Quelle (2) zu dem Behälter (1) umfasst, um die in dem Behälter (1) erzeugte Erwärmung zu reduzieren, **dadurch gekennzeichnet, dass** der Schritt des Regulierens/Bemessens des Gastransfers mindestens eines von Folgendem umfasst: ein Bemessen des Injektionsdurchmessers (D1), ein Bemessen des Durchsatzes (Q) von transferiertem Gas; wobei der Schritt des Regulierens/Bemessens des Gastransfers in Abhängigkeit vom L/D-Verhältnis zwischen der Länge (L) und dem Durchmesser (D) des Behälters durchgeführt wird.

2. Verfahren nach Anspruch 1, **dadurch gekennzeichnet, dass** es einen Schritt des Bestimmens oder Berechnens des L/D-Verhältnisses des Behälters, einen Schritt des Vergleichens dieses L/D-Verhältnisses mit einer ersten vorbestimmten Schwelle (S1) umfasst.

3. Verfahren nach Anspruch 1 oder 2, **dadurch gekennzeichnet, dass** es einen Schritt des Regulierens des Verhältnisses (Q/D1²) umfasst, der darin besteht, den Durchsatz Q und/oder den Injektionsdurchmesser (D1) in Abhängigkeit vom Vergleich zwischen dem Verhältnis (L/D) und der ersten Schwelle (S1) zu steuern oder zu bemessen.

4. Verfahren nach Anspruch 1, **dadurch gekennzeichnet, dass**, wenn das L/D-Verhältnis zwischen der Länge (L) und dem Durchmesser (D) des Behälters kleiner als die erste bestimmte Schwelle (S1) ist, der vorzugsweise zwischen zwei und vier enthalten ist und vorzugsweise gleich drei ist, der Schritt des Regulierens/Bemessens darin besteht, das Verhältnis (Q/D1²) zwischen dem Massendurchsatz (Q) des transferierten Gases und dem Quadrat des Injektionsdurchmessers (D1) über einer zweiten bestimmten Schwelle (S2) zu halten.

5. Verfahren nach einem der Ansprüche 3 bis 4, **dadurch gekennzeichnet, dass** der Schritt des Regulierens/Bemessens, der darin besteht, das Verhältnis (Q/D1²) über einer zweiten bestimmten Schwelle (S2) zu halten, mindestens eines von Folgendem umfasst: eine Erhöhung des Durchsatzes (Q) des transferierten Gases, eine Verringerung des Injektionsdurchmessers (D1).

6. Verfahren nach einem der Ansprüche 1 bis 5, **dadurch gekennzeichnet, dass** der Schritt des Regulierens/Bemessens des Gastransfers in Abhängigkeit vom Zielfülldruck des Behälters (1) durchgeführt wird.

7. Verfahren nach Anspruch 4 oder 5, **dadurch gekennzeichnet, dass** die bestimmte zweite Schwelle (S2) vom Zielfülldruck des Behälters (1) abhängig ist.

8. Verfahren nach Anspruch 7, **dadurch gekennzeichnet, dass** die zweite Schwelle (S2) zunimmt, wenn der Zielfülldruck des Behälters (1) zunimmt.

9. Verfahren nach einem der Ansprüche 7 oder 8, **dadurch gekennzeichnet, dass** das Gas Wasserstoff ist und wenn der Zielfülldruck des Behälters (1) zwischen 700 und 900 bar enthalten ist, die zweite Schwelle (S2) zwischen 175 und 225 kg.m⁻².s⁻¹ enthalten ist und vorzugsweise gleich 200 kg.m⁻².s⁻¹ ist.

10. Verfahren nach einem der Ansprüche 4,5,7,8,9, **dadurch gekennzeichnet, dass**, wenn das Verhältnis (L/D) zwischen der Länge (L) und dem Durchmesser (D) des Behälters größer als die erste bestimmte Schwelle (S1) ist, der Schritt des Regulierens/Bemessens darin besteht, das Verhältnis (Q/D1²) über der zweiten bestimmten Schwelle (S2) und unter einer dritten bestimmten Schwelle (S3) zu halten.

11. Verfahren nach Anspruch 10, **dadurch gekennzeichnet, dass** der Schritt des Regulierens, der darin besteht, das Verhältnis (Q/D1²) über einer zweiten bestimmten Schwelle (S2) und unter der dritten bestimmten Schwelle (S3) zu halten, mindestens eines von Folgendem umfasst: eine Zunahme oder eine Abnahme des Durchsatzes (Q) des transferierten Gases, eine Zunahme oder eine Abnahme des Injektionsdurchmessers (D1).

12. Verfahren nach Anspruch 11, **dadurch gekennzeichnet, dass**, wenn der Zielfülldruck des Behälters (1) zwischen 700 und 900 bar enthalten ist, die dritte Schwelle (S3) zwischen 1200 und 1600 kg.m⁻².s⁻¹ enthalten ist und vorzugsweise gleich 1400 kg.m⁻².s⁻¹ ist, wenn das Gas Wasserstoff ist und der Zielfülldruck des Behälters zwischen 200 und 300 bar enthalten ist, die zweite Schwelle zwischen 75 und 100 kg.m⁻².s⁻¹ enthalten sein kann und vorzugsweise gleich 85 kg.m⁻².s⁻¹ ist, wenn das Gas Wasserstoff ist und der Zielfülldruck des Behälters zwischen 300 und 400 bar enthalten ist, die zweite Schwelle zwischen 100 und 140 kg.m⁻².s⁻¹ enthalten sein kann und vorzugsweise gleich 120 kg.m⁻².s⁻¹ ist, wenn das Gas Wasserstoff ist und der Zielfülldruck des Behälters zwischen 450 und 600 bar enthalten ist, die zweite Schwelle zwischen 140 und 175 kg.m⁻².s⁻¹ enthalten sein kann und vorzugsweise gleich 160 kg.m⁻².s⁻¹ ist.

13. Verfahren nach einem der Ansprüche 1 bis 12, **dadurch gekennzeichnet, dass** der Schritt des Regulierens des Gastransfers vor oder zu Beginn des Gastransfers durchgeführt wird, das heißt das Bemessen des Injektionsdurchmessers und/oder das Bemessen des transferierten Gasdurchsatzes wird vor dem Beginn des Füllens festgelegt.

14. Verfahren nach einem der Ansprüche 1 bis 13, **dadurch gekennzeichnet, dass** der Behälter während des Gastransfers intern durch den Injektor horizontal angeordnet ist.

15. Vorrichtung zum Füllen von Behältern (1) mit Druckgas bis zu einem Zieldruck, umfassend eine Druckgasquelle (2), eine Gastransferleitung (3) von der Quelle, die mit mindestens einem Ventil (4) versehen und dazu bestimmt ist, mit einem Behälter (1) verbunden zu werden, wobei das Ende der Transferleitung (3), das dazu bestimmt ist, mit dem Behälter verbunden zu werden, einen Injektor (5) bildet, der einen bestimmten Injektionsdurchmesser (D1) aufweist, wobei die Vorrichtung ein elektronisches Organ (6) zur Steuerung des Füllens umfasst, das für die Steuerung des mindestens einen Ventils (4) sorgt, wobei das elektronische Steuerorgan (6) so konfiguriert ist, dass es Daten empfängt, speichert und verarbeitet und insbesondere dimensionale Eigenschaften des zu füllenden Behälters (1), nämlich die Länge (L) und den Durchmesser (D) des Behälters oder das L/D-Verhältnis zwischen diesen empfängt oder berechnet, wobei das elektronische Steuerorgan (6) auch so konfiguriert ist, dass es das L/D-Verhältnis mit mindestens einer Schwelle (S1) vergleicht und, in Abhängigkeit, die Notwendigkeit der Änderung mindestens eines Füllparameters unter den Folgenden modifiziert oder signalisiert: der Injektionsdurchmesser (D1), der Durchsatz (Q) des transferierten Gases in Abhängigkeit vom Verhältnis.

16. Vorrichtung nach Anspruch 15, **dadurch gekennzeichnet, dass** das elektronische Steuerorgan (6) so konfiguriert ist, dass es den Durchsatz Q und/oder den Injektionsdurchmesser einstellt oder modifiziert, um das Q/D1² Verhältnis zwischen dem Massendurchsatz Q des injizierten Gases und dem Quadrat des Injektionsdurchmessers D1 über einer zweiten vorbestimmten Schwelle (S2) und/oder innerhalb eines vorbestimmten Intervalls (S2-S3) zu halten.

## Claims

1. Method for filling a tank (1) with pressurised gas to a target pressure from at least one pressurised gas source (2) connected to the tank (1) via a transfer pipe (3) provided with at least one valve (4), the tank (1) having a cylindrical shape with a predetermined inner length (L) and with a predetermined inner diameter (D), the end of the transfer pipe (3) connected to the tank forming an injector (5) opening into the tank with a predetermined injection diameter (D1), wherein the method comprises a step for transferring pressurised gas from the source (2) to the tank at a predetermined flow rate (Q), the method comprising a step of controlling or sizing the transfer of gas from the source (2) to the tank (1) to reduce the heat produced in the tank (1), **characterised in that** the step of controlling/sizing the transfer of gas comprises at least one of: a sizing of the injection diameter (D1), a sizing of the flow rate (Q) of transferred gas; the step of controlling/sizing the transfer of gas being carried out according to the ratio L/D between the length (L) and the diameter (D) of the tank.

2. Method according to claim 1, **characterised in that** it comprises a step of determining or of calculating the ratio L/D of the tank, a step of comparing this ratio L/D with the first predetermined threshold (S1).

3. Method according to claim 1 or 2, **characterised in that** it comprises a step of controlling the ratio (Q/D1²) consisting of controlling or sizing the flow rate Q and/or the injection diameter (D1) according to the comparison between the ratio (L/D) and the first threshold (S1).

4. Method according to claim 1, **characterised in that**, when the ratio L/D between the length (L) and the diameter (D) of the tank is less than the first predetermined threshold (S1) which is comprised preferably between two and four and preferably equal to three, the step of controlling/sizing consists of maintaining the ratio (Q/D1²) between the mass flow rate (Q) of the transferred gas and the square of the injection diameter (D1) above a second predetermined threshold (S2).

5. Method according to any one of claims 3 to 4, **characterised in that** the step of controlling/sizing, consisting of maintaining the ratio (Q/D1²) above a second predetermined threshold (S2) comprises at least one of: an increase in the flow rate (Q) of the transferred gas, a decrease in the injection diameter (D1).

6. Method according to any one of claims 1 to 5, **characterised in that** the step of controlling/sizing the transfer of gas is carried out according to the target filling pressure of the tank (1).

7. Method according to claim 4 or 5, **characterised in that** the second predetermined threshold (S2) is dependent on the target filling pressure of the tank (1).

8. Method according to claim 7, **characterised in that** the second threshold (S2) increases when the target filling pressure of the tank (1) increases.

9. Method according to any one of claims 7 or 8, **characterised in that** the gas is hydrogen and when the target filling pressure of the tank (1) is comprised between 700 and 900 bar, the second threshold (S2) is comprised between 175 and 225kg. m⁻².s¹ and preferably equal to 200kg. m⁻².s⁻¹.

10. Method according to any one of claims 4, 5, 7, 8, 9, **characterised in that**, when the ratio (L/D) between the length (L) and the diameter (D) of the tank is greater than the first predetermined threshold (S1), the step of controlling/sizing consists of maintaining the ratio (Q/D1²) above a second predetermined threshold (S2) and below a third predetermined threshold (S3).

11. Method according to claim 10, **characterised in that** the step of controlling, consisting of maintaining the ratio (Q/D1²) above a second predetermined threshold (S2) and below a third predetermined threshold (S3) comprises at least one of: an increase or a decrease in the flow rate (Q) of transferred gas, an increase or a decrease in the injection diameter (D1).

12. Method according to claim 11, **characterised in that** when the target filling pressure of the tank (1) is comprised between 700 and 900 bar, the third threshold (S3) is comprised between 1200 and 1600kg. m⁻².s⁻¹ and preferably equal to 1400kg. m⁻².s⁻¹, when the gas is hydrogen and the target filling pressure of the tank is comprised between 200 and 300 bar, the second threshold can be comprised between 75 and 100kg. m⁻².s⁻¹ and preferably equal to 85kg. m⁻².s-¹, when the gas is hydrogen and the target filling pressure of the tank is comprised between 300 and 400 bar, the second threshold can be comprised between 100 and 140kg. m⁻².s⁻¹ and preferably equal to 120kg. m⁻².s⁻¹, when the gas is hydrogen and the target filling pressure of the tank is comprised between 450 and 600 bar, the second threshold can be comprised between 140 and 175kg. m⁻².s⁻¹ and preferably equal to 160kg. m⁻².s⁻¹.

13. Method according to any one of claims 1 to 12, **characterised in that** the step of controlling the transfer of gas is carried out before or at the start of the gas transfer, i.e. the sizing of the injection diameter and/or the sizing of the flow rate of the transferred gas is set before the starting of the filling.

14. Method according to any one of claims 1 to 13, **characterised in that** the tank is arranged horizontally during the transfer of the gas into it via the injector.

15. Device for filling tanks (1) with pressurised gas to a target pressure comprising a pressurised gas source (2), a transfer pipe (3) of gas from the source provided with at least one valve (4) and intended to be connected to a tank (1), the end of the transfer pipe (3) intended to be connected to the tank forming an injector (5) having a predetermined injection diameter (D1), the device comprising an electronic member (6) for controlling the filling, providing the control of the at least one valve (4), the electronic member (6) for controlling being configured to receive, store and process data and in particular, to receive or calculate dimensional features of the tank (1) to be filled, namely the length (L) and the diameter (D) of the tank or the ratio L/D between the latter, the electronic control member (6) also being configured to compare the ratio L/D with at least one threshold (S1) and, accordingly, modify or report the need to modify at least one filling parameter from among: the injection diameter (D1), the flow rate (Q) of transferred gas according to the ratio.

16. Device according to claim 15, **characterised in that** the electronic control member (6) is configured to establish or modify the flow rate Q and/or the injection diameter in order to maintain the ratio Q/D1² between the mass flow rate Q of the injected gas and the square of the injection diameter D1 above a second predetermined threshold (S2) and/or within a predetermined interval (S2-S3).
